# EUROPEAN PATENT APPLICATION

(11) **EP 2 043 093 A1**
(43) Date of publication of application: **01.04.2009**
(21) Application number: 08005941.3
(22) Date of filing: 28.03.2008
(51) Int. Cl.: G11B 7/125, G11B 7/135, G11B 7/00

(54) **Optical pickup head and optical recording and replaying device**

(30) Priority: 27.09.2007 JP 2007251027
(71) Applicant: SAE Magnetics (H.K.) Ltd., Shatin, N.T., Hong Kong (CN)
(72) Inventor: Hirose, Kazunori, Hong Kong Science Park, Shatin, N.T. (HK); Uno, Masaru, Hong Kong Science Park, Shatin, N.T. (HK)
(74) Representative: Luderschmidt, Schüler & Partner

(57) **Abstract**

Optical pickup head comprises two semiconductor lasers for irradiating first to third optical beams, light receiving element for converting an optical signal into an electrical signal, and object lens unit. Object lens unit includes first object lens (object lens for CD, DVD, and HD-DVD) and second object lens (object lens for Blu-ray Disc) having a numerical aperture different from first object lens. First object lens and second object lens are moved in a tangential direction or in a radial direction of recording medium, so that first object lens and second object lens can be selectively arranged opposite to,a position to be irradiated with the optical beam of recording medium.

## Description

### BACKGROUND OF THE INVENTION

### 1. Field of the Invention

The present invention relates to an optical pickup head and an optical recording and replaying device having the same, which are used for recording/replaying information on/from an optical recording medium.

### 2. Description of the Related Art

Recent times have seen the growth of a so-called next generation DVD, for example, a HD-DVD (High Definition DVD) and a Blu-ray Disc [registered trade mark] as an optical recording medium (optical disc) in addition to a CD (Compact Disc) and a DVD (Digital Versatile Disc). Each optical disc is different as regards the wavelength of optical beams used for optical recording and replaying and as regards the depth of layer in which recording is performed. Likewise, the numerical apertures of the object lenses of the optical pickup heads used for recording and replaying these optical discs are often different, respectively. Heretofore, to replay each of these optical discs, separate optical pickup heads have been used. These optical pickup heads have not been compatible.

Hence, in recent years, an optical recording and replaying device has been developed, in which the recording and replaying of the different types of the optical discs are performed by using a single optical pickup head. Such an optical recording and replaying device can irradiate optical beam(s) for each optical disc by a single optical pickup head. In the case of such an optical pickup head, a plurality of lines of optical paths are provided in an outgoing path leading to a recording medium and/or a return path leading to a light receiving element from the recording medium. As a result, this leads to an increase in size and weight as well as in cost of the optical pickup head. Further, when the optical path including the object lens at a position that deviates from the tangential direction center of the optical disc is used, because of a tracking servo, there is a disadvantage of not being able to use a so-called three-beam method, which is at a low cost and is commonly used.

In contrast to this, Japanese Patent Application Laid-Open No. 2007-026540 discloses a configuration in which a liquid crystal element is disposed together with the object lens on the same optical axis. In this configuration, the numerical aperture is changed by adjusting the crystal liquid element, and the different optical discs, particularly, the optical discs different as regards the depth of the layer for performing recording can be handled.

As in Japanese Patent Application Laid-Open No. 2007-026540, the configuration provided with an optical member for aberration correction, such as the liquid crystal element, in addition to the ordinary object lens, leads to high cost since an expensive optical member is added. Further, when the liquid crystal element is fixed to a housing, there is a disadvantage in that the shifting characteristic of the object lens is poor. Namely, due to eccentricity of the optical disc and the like, when the object lens is shifted in a radial direction, the centers of the liquid crystal element and the object lens are offset from each other. As a result, the aberration correction using a liquid crystal element is not perfect, and the shifting characteristics are deteriorated. On the other hand, when the liquid crystal element is fixed to an actuator, the actuator becomes heavy, so that the sensitivity (driving amount per the applied voltage) is reduced. Moreover, the need for mounting a circuit for feeding power to the actuator on a lens holder portion arises, and this creates a problem in which the mechanism becomes significantly enlarged.

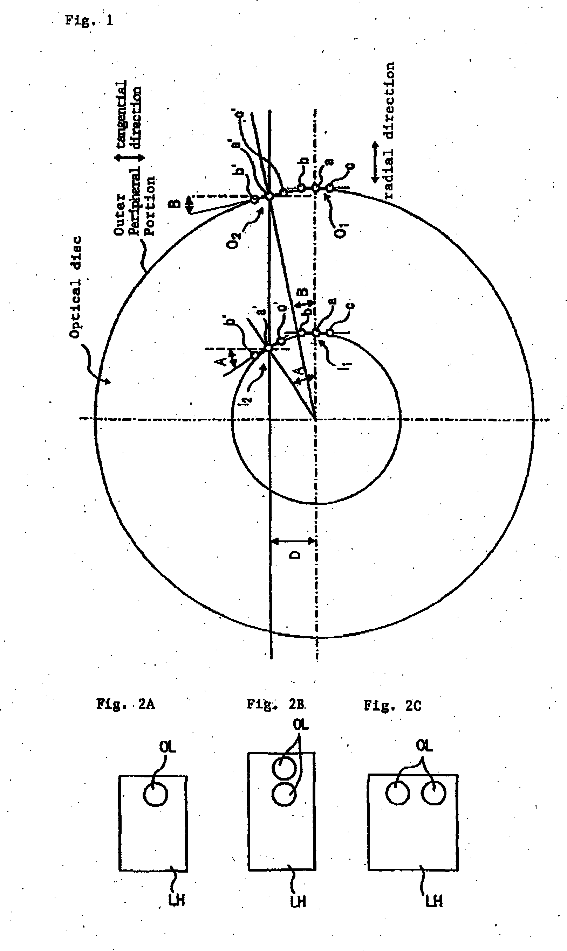

Next, the case of using two optical lenses at different positions will be described with reference to FIG. 1. In this case, one lens is displaced in the radial direction or in the tangential direction of the optical disc from the other lens. In an ideal state in which the object lenses are not offset in the tangential direction, the angles made by the three beams a, b, and c are adjusted to become a predetermined angle (approximately 1 degree under normal conditions) in the track direction (tangential direction), and this state is shown by symbol I₁. In this case, even when the optical system including these lenses moves to the outside in the radial direction, since the positions of the three beams a, b, and c do not move in the track direction (tangential direction), no problem occurs (this state is shown by symbol O₁). However, when the object lenses are offset in the tangential direction (for example, by distance D), the positions of the three beams a', b', and c' are shifted in the track direction by a certain degree of angle (for example, angle A) as compared with the ideal state I₁ (this state is shown by symbol I₂). Assuming that the three-beam method is executed, the adjustment is made in conformity with angle A. At this time, when the optical system including these lenses moves to the outside in the radial direction, the angle in the tangential direction is shifted at the outer peripheral position of the optical disc, for example, by angle B that is different from angle A (this state is shown by symbol O₂). Namely, at this outer peripheral position of the optical disc, an optimal angle in the tangential direction is angle B. However, as described above, since this optical system has already been adjusted in conformity with angle A, the system is put into a state that is different from the optimal state having the optimal angle (angle B) of the three-beam method at the outer peripheral position, and is unable to obtain an optimum tacking error signal.

As described above, when the object lens is shifted from the tangential direction center of the optical disc (typically when shifted not less than approximately 50 µm), the three-beam method cannot be executed. Namely, when two object lenses are provided and both lenses are offset from each other in the tangential direction, the position of one lens is isolated from the other lens to the extent of at least several millimeters, so that the three-beam method cannot be applied to the system including the object lenses that deviates in the tangential direction from the center.

Further, as shown in FIG. 2C, when the two object lenses OL are disposed to be shifted in the radial direction, the three-beam method can be applied. However, this configuration has a problem in that the width of an object lens holder LH is large so that it is not suitable for miniaturization of the optical head and the recording and replaying device, as compared with the configuration having only one object lens OL (see FIG. 2A) and with the configuration disposed with the two object lenses OL which are offset in the tangential direction (see FIG. 2B).

### SUMMARY OF THE INVENTION

An object of the present invention is to provide an optical pickup head and an optical recording and replaying device which is capable of replaying a plurality of types of optical discs, and which attains miniaturization and low-cost, and in which the three-beam method is available.

The optical pickup head of the present invention comprises:
a semiconductor laser for irradiating optical beam;
a light deceiving element for converting an optical signal into an electrical signal; and
an object lens unit including a first object lens and a second object lens having a numerical aperture different from the first object lens, and capable of moving the first object lens and the second object lens in a tangential direction or in a radial direction of a disc-shaped recording medium so that the first object lens and the second object lens are selectively opposite to a position to be irradiated with the optical beam of the recording medium.

According to this configuration, the position of the object lens corresponding to suitable numerical aperture and wavelength for the different recording medium is changed, so that an outgoing path and a return path can be shared and simplification of the optical path can be attained.

Further, a collimator lens positioned between the semiconductor laser and the object lens unit, and a drive unit for moving the collimator lens in an optical axis direction may be provided.

The optical pickup head may comprise one or more semiconductor lasers for irradiating at least two types of optical beams, the first object lens may be an object lens for HD-DVD, and the second object lens may be an object lens for Blu-ray Disc. In this case, in order to handle both HD-DVD and Blu-ray Disc which are recorded and replayed by the same blue laser, the object lenses having different numerical apertures respectively are switched to each other. Therefore, the optical recording and replaying head having a simple optical path can be fabricated.

The object lens unit may include a support member in which the first object lens and the second object lens are mounted side by side so that their optical axes are parallel to each other, and the support member rotates in a plane that intersects the optical axes of the first object lens and the second object lens or moves in parallel in a place that intersects the optical axes of the first object lens and the second object lens, so that the first object lens and the second object lens can be moved.

The optical recording and replaying device of the present invention comprises the optical pickup head having any one of the above described configurations, and comprises a medium holding mechanism for holding and rotating the recording medium.

According to the present invention, the two object lenses that are mutually different in the numerical aperture can be selectively disposed opposite to a position to be irradiated with the optical beam of the recording medium. Consequently, an appropriate object lens can be selected according to the types of the recording mediums to attain a desired converging state.

Since the two object lenses are disposed at the same position when used respectively, the outgoing optical path heading for the recording medium may be of a single line. Further, the return optical path heading for the light receiving element from the recording medium may be also of a single line. Consequently, miniaturization of the optical pickup head is possible. Because the optical parts can be commonly used for the different recording mediums, the number of optical parts can be reduced, and low cost and light weight can be attained. Moreover, by shifting the position and the angle, the number of elements affecting the characteristic can be reduced, so that reliability can be increased.

Further, since a plurality of object lenses are not provided at different positions for the disc, the displacement of the object lens will not have any effect. Consequently, for example, a general three-beam method can be used as a tracking error detection method.

### BRIEF DESCRIPTION OF THE DRAWINGS

FIG. 1 is an explanatory drawing regarding the displacement of an object lens and the adjustment in a three-beam method;
FIG. 2A is a schematic drawing showing an object lens holder having one object lens;
FIG. 2B is a schematic drawing showing an object lens holder in which two object lenses are disposed by being shifted in the tangential direction;
FIG. 2C is a schematic drawing showing an object lens holder in which two object lenses are disposed by being shifted in the radial direction;
FIG. 3 is a schematic drawing showing the configuration of an optical pickup head of a first embodiment of the present invention;
FIG. 4 is a schematic drawing showing the configuration of an optical pickup head of a second embodiment of the present invention; and
FIG: 5 is a schematic drawing showing the configuration of an optical pickup head of a third embodiment of the present invention.

The above and other objects, features and advantages of the present invention will become apparent from the following description with reference to the accompanying drawings which illustrate examples of the present invention

### DETAILED DESCRIPTION OF THE PREFERRED EMBODIMENTS

Hereinafter, embodiments of the present invention will be described with reference to the drawings.

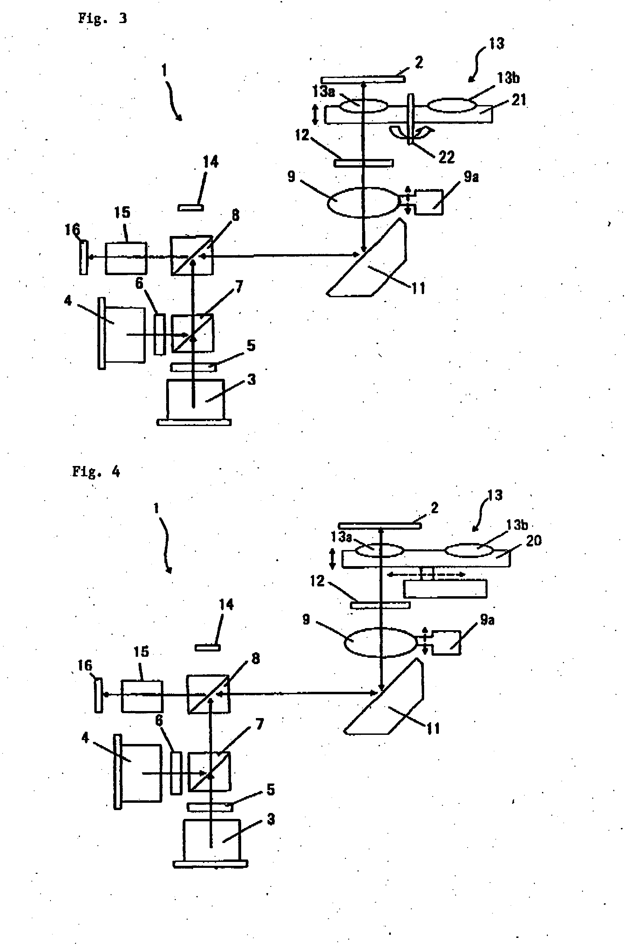

FIG. 3 is a schematic drawing showing the configuration of an optical system of optical pickup head 1 according to the present invention. This optical pickup head 1 can perform recording or replaying digital information in each of four types of optical recording mediums 2 whose physical track pitches are different.

Among the four types of optical recording mediums used in the present embodiment, a first optical recording medium is DVD-ROM, DVD ± R, DVD ± RW, DVD-RAM, and an optical recording medium having the equivalent structure and storage capacity as these mediums. A second optical recording medium is CD-ROM, CD-R, CD-RW and an optical recording medium having the equivalent structure and storage capacity as these mediums. A third optical recording medium is HD-DVD-ROM, HD-DVD-R, HD-DVD-RW, HD-DVD-RAM and an optical recording medium having the equivalent structure and storage capacity as these mediums, which are one of the so-called next generation DVDs. A fourth optical recording medium is BD-ROM, BD-R, BD-RE, and an optical recording medium having the equivalent structure and storage capacity as these mediums, which are Bluray Disc, that is, the other next generation DVD.

Optical pickup head 1, as shown in FIG. 3, has two semiconductor lasers 3 and 4 as a light source for emitting optical beams. Semiconductor laser 3 has a first light emitting area for emitting a red laser beam (first optical beam) having a 650 nm wavelength for recording/replaying in the DVD, and a second light emitting area for emitting an infrared laser beam (second optical beam) having a 780 nm wavelength for recording/replaying in the CD, which are spaced at predetermined intervals and which are stored inside one package. On the other hand, semiconductor laser 4 emits a blue laser beam (third optical beam) having a 405 nm wavelength for recording/replaying in the next generation DVDs (HD-DVD and Blu-ray Disc).

Semiconductor lasers 3 and 4 are disposed such that the optical axis of the first or second optical beam emitted from semiconductor laser 3 and the optical axis of third optical beam emitted from semiconductor laser 4 are orthogonal to each other

At a position opposite to the light emitting portion of semiconductor laser 3, diffraction grating 5 is disposed. One surface of this diffraction grating 5, though not illustrated, is formed with an optimized diffraction pattern in order to divide the first and second optical beams emitted from semiconductor laser 3 into three optical beams (0-dimensional main beam and ± one dimensional sub beams). Namely, diffraction grating 5 divides the first and second optical beams emitted from semiconductor laser 3 such that the ± one dimensional sub beams are converged respectively at the symmetrical positions spaced by a predetermined distance in the track direction with the converging position of the main beam as a center, in the surface (information recording surface) of optical recording medium 2.

Further, at the position opposite to the light emitting portion of semiconductor laser 4, diffraction grating 6 is also disposed. One surface of this diffraction grating 6, though not illustrated, is formed with an optimized diffraction pattern in order to divide the third optical beam emitted from semiconductor laser 4 into three optical beams (0-dimensional main beam and ± one dimensional sub beams). Namely, diffraction grating 6 divides the third optical beam emitted from semiconductor laser 4 such that the ± one dimensional sub beams are converged respectively at the symmetrical positions spaced by a predetermined distance in the track direction with the converging position of the main beam as a center, in the surface (information recording surface) of optical recording medium 2.

Dichroic prism 7 is disposed at the position which is downstream from diffraction grating 5 and which is downstream from diffraction grating 6, that is, at the position where the first or the second optical beam, which is emitted from semiconductor laser 3 and which transmits diffraction grating 5, and the third optical beam, which is emitted from semiconductor laser 4 and which transmits diffraction grating 6, cross at right angles to each other. Dichroic prism 7 has an approximately cubic shape, and almost completely transmits the first and second optical beams, and almost completely reflects the third optical beam.

Polarization beam splitter 8 is disposed near the side opposite to the side that faces refraction grating 5, of dichroic prism 7. Polarization beam splitter 8 reflects approximately 90% of the optical beam (outgoing path optical beam) from dichroic prism 7, and allows the beam to be incident on rising mirror 11 which will be described later, and at the same time, allows the remaining approximately 10% to be transmitted and to be incident on front monitor optical detector 14 which will be described later. Further, polarization beam splitter 8 allows a return optical beam (return path optical beam) from rising mirror 11 to be transmitted so as to be incident on anamorphic lens 15 which will be described later.

Rising mirror 11 is disposed near the side opposite to the side that faces anamorphic lens 15, of polarization beam splitter 8. Rising mirror 11 reflects the optical beam from polarization beam splitter 8 and bends its optical path to allow it rise to the direction heading for optical recording medium 2 and enter collimator lens 9 which will be described later. On the other hand, rising mirror 11 reflects the optical beam from collimator lens 9 and bends its optical path to allow it to enter polarization beam splitter 8.

On the optical path of the optical beam reflected by rising mirror 11, collimator lens 9, quarter-wavelength plate 12, and object lens unit 13 are disposed in this order. In reality, however, collimator lens 9, quarterwavelength plate 12, and object lens unit 13 are disposed so as to be superposed in a direction vertical to the plane of FIG. 3. Collimator lens 9 converts the optical beam from the rising mirror 11 into a collimated beam. Drive unit 9a for collimator lens 9 drives collimator lens 9 in an optical axis direction by a motor so as to adjust the spherical aberration amount.

Quarter-wavelength plate 12 converts the main beam from rising mirror 11 and ± one dimensional sub-beams (hereinafter, these beams are collectively referred to as "outgoing path optical beams") into a circularly polarized beam from the linearly polarized beam, and converts the optical beam from object lens unit 13 into the linearly polarized beam in a direction orthogonal to the polarizing direction of the outgoing path optical beam, from the circularly polarized beam.

Object lens unit 13 converges the collimated beam from quarter-wavelength plate 12 on the information recording surface of optical recording medium 2, and has a plurality of lenses 13a and 13b for converting the reflected beam from optical recording medium 2 into the collimated beam. The details of this optical lens unit 13 will be described later.

Further, ahead of the straight line heading for polarization beam splitter 8 from dichroic prism 7, front monitor optical detector 14 is disposed. Front monitor optical detector 14 measures the light intensity of the first to the third optical beams emitted from semiconductor lasers 3 and 4. The outputs of semiconductor lasers 3 and 4 are adjusted based on the output of this front monitor optical detector 14.

Near the side opposite to the side that faces rising mirror 11, of polarization beam splitter 8, that is, ahead of the straight line heading for polarization beam splitter 8 from rising mirror 11, anamorphic lens 15 and light receiving element 16 are disposed in this order. Anamorphic lens 15 gives astigmatism for detecting a out-of-focus error to the optical beam from polarization beam splitter 8, and allows the optical beam to form an image on light receiving element 16. Light receiving element 16 photoelectrically converts each of the received optical beams in each of the divided light receiving areas (not shown) independently, and outputs electrical signals.

Here, object lens unit 13 which is a main feature of the present invention will be described. Object lens unit 13 according to the present embodiment is configured such that object lens (first object lens) 13a for CD, DVD, and HD-DVD and object lens (second object lens) 13b for Blu-ray Disc are mounted on lens holder assy (support member) 21, Object lens 13a for CD, DVD, and HD-DVD and object lens 13b for Blu-ray Disc are disposed side by side so that their optical axes are parallel to each other. Lens holder assy 21 is vertically (in a focusing direction) movable along shaft 2, and is rotatable about shaft 22 in a plane vertical to the optical axes of object lens 13a for CD, DVD, and HD-DVD and object lens 13b for Blu-ray Disc. According to the present embodiment, when CD, DVD, or HD-DVD is to be replayed as recording medium 2, object lens unit 13 is set such that object lens 13a for CD, DVD, and HD-DVD comes to a position opposite to the position to be irradiated with the optical beam of recording medium 2. When the Blu-ray Disc is to be replayed as recording medium 2, object lens unit 13 is set such that object lens 13b for Blu-ray Disc comes to a position apposite to the position to be irradiated with the optical beams of recording medium 2. When switching one of the replay of CD, DVD, or HD-DVD and the replay of Blu-ray Disc to the other, lens holder assy 21 is rotated about shaft 22 in a plane orthogonal (or cross) to the optical axes of both object lens 13a and 13b, thereby allowing object lens 13a for CD, DVD, and HD-DVD and object lens 13b for Blu-ray Disc to be moved.

Specifically, when a CD is to be replayed as recording medium 2, as described above, the posture of lens holder assy 21 is set such that object lens 13a for CD, DVD, and HD-DVD comes to a position opposite to recording medium 2. Second optical beam (infrared laser beam) having a 780nm wavelength is emitted from a second light emitting area of semiconductor laser 3. This second optical beam is divided into three optical beams (0 dimensional main beam and ± one dimensional sub beams) by diffraction grating 5, and these three optical beams (outgoing path optical beams) transmit dichroic prism 7, thereby entering polarization beam splitter 8. Approximately 90% of the outgoing path optical beam having entered polarization beam splitter 8 is reflected, and enters rising mirror 11, and is further reflected by rising mirror 11, and enters collimator lens 9 to be converted into the collimated beam. In this manner, the outgoing path optical beam converted into a parallel light beam is further converted into the circularly polarized beam by quarter-Wavelength plate, 12, and after that, is converged at a predetermined position of recording medium (CD) 2 by object lens 13a for CD, DVD, and HD-DVD of object lens unit 13. At this time, object lens 13a for CD, DVD, and HD-DVD allows the outgoing path optical beam to be converged at a position of approximately 1.2 mm in depth from the surface of recording medium (CD) 2. The numerical aperture NA of the lens at this time is 0.45.

The reflected beam (hereinafter, referred to as "return path optical beam") which is reflected by recording medium (CD) 2 of the outgoing path optical beam irradiated in this manner, transmits object lens 13a for CD, DVD, and HD-DVD, and is converted into the linearly polarized beam by quarter-wavelength plate 12, and enters polarization beam splitter 8 through collimator lens 9 and rising mirror 11. Further, this return path optical beam transmits polarization beam splitter 8, and forms an image on light receiving element 16 by anamorphic lens 15. Light receiving element 16 photoelectrically converts each of the received optical beams in each of the divided light receiving area (not shown) independently, and outputs electrical signals. These electrical signals are processed by a processing circuit (not shown) so that the information recorded in recording medium (CD) 2 is read.

Next, when a DVD is to be replayed as recording medium 2, object lens unit 13 remains in the same state as the replay of CD and the first optical beam (red laser beam) having a 650 nm wavelength is emitted from a first light emitting area of semiconductor laser 3. Similarly to the replay of CD, the first optical beam passes through diffraction grating 5, dichroic prism 7, polarization beam splitter 8, rising mirror 11, collimator lens 9, and quarter-wavelength plate 12, and is converged at a predetermined position of recording medium (DVD) 2 by object lens 13a for CD, DVD, and HD-DVD of object lens unit 13. At this time, object lens 13a for CD, DVD, and HD-DVD allows the outgoing path optical beam to be converged at a position of approximately 0.6 mm in depth from the surface of recording medium (DVD) 2. The numerical aperture NA of the lens at this time is 0.6. The reflected beam (return path optical beam) which is reflected by recording medium (DVD) 2 transmits object lens 13a for CD, DVD, and HD-DVD, and forms an image on light receiving element 16 through quarter-wavelength plate 12, collimator lens 9, rising mirror 11, polarization beam splitter 8, and anamorphic lens 15. The information recorded in recording medium (DVD) 2 is read by means of light receiving element 16 and the processing circuit (not shown). The replay of DVD is different from the above described replay of CD only in the optical beam emitted from semiconductor laser 3, and is quite the same in other points, and therefore, more description thereof will be omitted.

Next, the case of replaying HD-DVD as recording medium 2 will be described. In this case, object lens unit 13 remains in the same state as the replays of CD and DVD, and object lens 13a for CD, DVD, and HD-DVD is set at a position opposite to recording medium 2. Semiconductor laser 4 emits the third optical beam (blue laser beam) having a 405 nm wavelength. This third optical beam is divided into three optical beams (0-dimensional main beam and ± one dimensional sub beams) by diffraction grating 6, and these three optical beams (outgoing path optical beams) are reflected by dichroic prism 7, and enter polarization beam splitter 8. After that, similarly to the replays of CD and DVD, the third optical beam passes through polarization beam splitter 8, rising mirror 11, collimator lens 9, and quarter - wavelength plate 12, and is converged at a predetermined position of recording medium (HD-DVD) 2 by object lens 13a for CD, DVD, and HD-DVD of object lens unit 13. At this time, object lens 13a for CD, DVD, and HD-DVD allows the outgoing path optical beam to be converged at a position of approximately 0.6 mm in depth from the surface of recording medium (HD-DVD) 2. The numerical aperture NA of the lens is 0.65. The reflected beam (return path optical beam) which is reflected by recording medium (HD-DVD) 2 transmits object lens 13a for CD, DVD, and HD-DVD, and forms an image on light receiving element 16 through quarter-wavetength plate 12, collimator lens 9, rising mirror 11, polarization beam splitter 8, and anamorphic lens 15. The information recorded in recording medium (HD-DVD) 2 is read by means of light receiving element 18 and a processing circuit (not shown). The replay of HD-DVD is different from the above described replays of CD and DVD only in the third optical beam being emitted from the semiconductor laser 4 and being reflected by dichroic prism 7, and is quite the same in other points, and therefore, more description thereof will be omitted.

Next, the case of replaying Blu-ray Disc as recording medium 2 will be described. In this case, lens holder assy 21 of object lens unit 13 rotates about shaft 22 from a state in the replay of CD or DVD, and object lens 13b for Blu-ray Disc is set at a position opposite to recording medium 2. Similarly to the replay of HD-DVD, the third optical beam (blue laser beam) having a 405 nm wavelength is emitted from semiconductor laser 4, and is divided into three optical beams by diffraction grating 6, and is reflected by dichroic prism 7, and is allowed to enter polarization beam splitter 8. After that, the third optical beam passes through polarization beam splitter 8, rising mirror 11, collimator lens 9, and quarter-wavelength plate 12, and is converged at a predetermined position of recording medium (Blu-ray Disc) 2 by means of object lens 13b for Blu-ray Disc of object lens unit 13. At this time, object lens 13b for Blu-ray Disc allows the outgoing path optical beam to be converged at a position of approximately 0.1 mm in depth from the surface of recording medium (Blu-ray Disc) 2. The numerical aperture NA of the lens is 0.85. The reflected beam (return path optical beam) which is reflected by recording medium (Blu-ray Disc) 2 transmits object lens 13b for Blu-ray Disc, and forms an image on light receiving element 16 through quarter-wavelength plate 12, collimator lens 9, rising mirror 11, polarization beam splitter 8, and anamorphic lens 15. The information recorded in recording medium (Blu-ray Disc). 2 is read by means of light receiving element 16 and a processing circuit (not shown). The replay of Blu-ray Disc is different from the above described replay of HD-DVD only in the posture of lens holder assy 21 of object lens unit 13, that is in the fact that object lens 13b for Blu-ray Disc is opposite to the recording medium 2, and is quite the same in other points, and therefore, more description thereof will be emitted.

In the replay of each recording medium, approximately 10% of the outgoing path optical beams transmits polarization beam splitter 8, and enters front monitor optical detector 14. This front monitor optical detector 14 measures the light intensity of each optical beam, and the outputs of semiconductor lasers 3 and 4 are adjusted based on the measured result.

As described above, according to the present embodiment, object lens 13a for CD, DVD, and HD-DVD and object lens 13b for Blu-ray Disc are mounted to lens holder assy 21, and this lens holder assy 21 is configured to be rotatable about shaft 22. According to this configuration, just by allowing lens holder assy 21 to rotate, any one of object lens 13a for CD, DVD, and HD-DVD and object lens 13b for Blu-ray Disc can be selectively disposed at a position (same position) opposite to the position to be irradiated with the optical beams of recording medium 2. Consequently, the optical beam can be appropriately converged respectively for some types of the recording mediums which are different from each other in the distance (thickness) from the surface to the recording layer of the disc and/or in the numerical aperture of the object lens to be used. Moreover, operation of switching the object lenses, when the recording medium is changed, is easy. Further, since two object lenses 13a and 13b are selectively disposed at the same position opposite to recording medium, no large error arises, and a tracking servo system that uses the three-beam method can be applied whichever disc is used. Further, the outgoing optical path from dichroic prism 7 to the recording medium 2 is only one line, and moreover, the return optical path from recording medium 2 to light receiving element 16 is also only one line, so that the number of parts can be minimized. This can contribute to the miniaturization and weight saving of the optical pickup head, and at the same time, because of the reduction in the number of parts, the factors that cause errors are reduced and reliability is increased.

With regard to the optical pickup heads of the present invention and the three types of prior art optical pickup heads capable of replaying CD, DVD, and Blu-ray Disc and/or HD-DVD, Table 1 shows the number of respective members for comparing to each other. Prior art examples 1 to 3 are products of a plurality of manufactures other than the present applicant, which are commercial available or which are exhibits displayed in the past exhibition. Prior art example 1 is a product capable of replaying Blu-ray Disc and HD-DVD. Prior art example 2 is a product capable of replaying Blu-ray Disc, but incapable of replaying HD-DVD. Prior art example 3 is a product capable of recording and replaying Blu-ray Disc, but incapable of replaying HD-DVD. The configurations of a second embodiment and a third embodiment of the present invention will be described later.

**[Table 1]**

| | Embodiments 1,2 | Embodiment 3 | Prior art example 1 | Prior art example 2 | Prior art example 3 |
|---|---|---|---|---|---|
| Semiconductor laser | 2 | 1 | 3 | 1 | 3 |
| Dichroic prism | 1 | 1 | 1 | 1 | 1 |
| Polarization beam splitter | 1 | 1 | 3 | 2 | 1 |
| Collimator lens | 1 | 1 | 2 | 1 | 2 |
| Rising mirror | 1 | 1 | 2 | 1 | 1 |
| Object lens | 2 | 2 | 2 | 1 | 2 |
| Anamorphic lens | 1 | 1 | 2 | 2 | 1 |
| Light receiving element | 1 | 2 | 2 | 2 | 3 |
| Total number of main optical parts | 10 | 10 | 17 | 11 | 14 |

Referring to this table 1, though Blu-ray Disc and HD-DVD can be replayed in each embodiment of the present invention, the number of parts in such embodiments is small. Particularly; the configuration having only one light receiving element, as in embodiments 1 and 2, has never been realized heretofore.

It is to be noted that distance (thickness) from the disc surface to the recording layer of CD is different from that of DVD and HD-DVD, and the numerical aperture of the object lens that is to be used when replaying of CD is also different from that of DVD and HD-DVD. However, one object lens (object lens 13a for CD, DVD, and HD-DVD) will allow recording/replaying for the CD, DVD, and HD-DVD by changing a numerical aperture NA and a wave aberration through adjustment of the diffraction grating structure and the like of the object lens. Since the fact that CD, DVD, and HD-DVD can be handled in this manner by one object lens by utilizing the diffraction structure and the like, is already known, the description thereof will be omitted. In contrast to this, in the present embodiment, in addition to CD, DVD, and HD-DVD, Blu-ray Disc can be handled, which is recorded and replayed by using the same blue laser as recording and replaying HD-DVD, and in which the distance (thickness) from the disc surface to the recording layer and the numerical aperture of the object lens used when replaying are different from those for CD, DVD, and HD-DVD. Since HD-DVD and Blu-ray Disc are recorded and replayed by using the same blue laser, it is not easy to manage the distance (thickness) from the disc surface to the recording layer and the numerical aperture by means of the same object lens, by applying the known diffraction structure. Hence, in the present embodiment, object lens 13b for Blu-ray Disc is prepared separately from object lens 13a for CD, DVD, and HD-DVD. Any one of object lens 13a for CD, DVD, and HD-DVD and object lens 13b for Blu-ray Disc is selectively and easily disposed at a predetermined position (at the same position) opposite to the recording medium by using rotatable lens holder assy 21, without making the structure of the object lens itself complicated. As a result, by using the object lens suitable for each type of the recording mediums, recording and replaying can be performed satisfactorily at the optimum position.

Next, a second embodiment of the present invention will be described with reference to FIG. 4.

Similarly to the first embodiment, object lens unit 13 of the present embodiment is also configured such that object lens 13a for CD, DVD, and HD-DVD and object lens 13b for Blu-ray Disc are mounted side by side on lens holder assy (support member) 20 so that their optical axes are parallel to each other. This lens holder assy 20 can linearly and parallel move in a horizontal direction in a plane vertical to the optical axes of object lens 13a for CD, DVD, and HD-DVD and object lens 13b for Blu-ray Disc. According to the present embodiment, when CD, DVD, or HD-DVD are to be replayed as recording medium 2, object lens unit 13 is set such that object lens 13a for CD, DVD, and HD-DVD comes to a position opposite to recording medium 2. When Blu-ray Disc is to be replayed as recording medium 2, object lens unit 13 is set such that object lens 13b for Blu-ray Disc comes to a position opposite to recording medium 2. Namely, when switching one of the replay of CD, DVD, or HD-DVD and the replay of Blu-ray Disc to the other, lens holder assy 20 is parallel shifted in the horizontal direction, thereby allowing object lens 13a for CD, DVD, and HD-DVD and object lens 13b for Blu-ray Disc to be moved. The moving direction of the lens holder assy 20 may be the radial direction or the tangential direction of recording medium 2. Since the structure other than object lens unit 13 and the method for recording/replaying are the same as the first embodiment, the description thereof will be omitted.

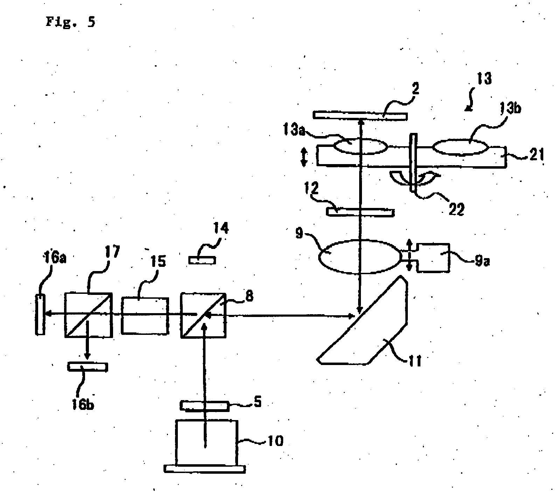

Next, a third embodiment of the present invention will be described with reference to FIG. 5.

In the present embodiment, light source, (semiconductor laser) 10 includes light emitting areas of the laser beams having three different wavelengths, that is, a light emitting area of a blue laser for Blu-ray Disc and HD-DVD. a light emitting area of a laser for DVD, and a light emitting area of a laser for CD which are formed at predetermined intervals from one another and which are stored inside one package. Consequently, there is no need to provide dichroic prism 7 in the outgoing path from light source 10 to object lens unit 13. However, in the return path from object lens unit 13 to light receiving elements 16a and 16b, dichroic prism 17 is disposed downstream of anamorphic lens 15. In the present embodiment, two light receiving elements 16a and 16b are provided, and light receiving element 16a receives signals from Blu-ray Disc and HD-DVD, and light receiving element 16b receives a signal from DVD and a signal from CD, respectively, so that dichroic prism 17 separates the light beam including information from each disc. In this case, since it is not easy to receive the signals of three wavelengths by one light receiving element because of the narrowness of space, light beam is divided into a blue laser and a laser for DVD/CD and then divided lasers are received in the present embodiment. Other structure and method for recording/replaying are the same as the first embodiment, and therefore, the description thereof will be omitted. In the present embodiment, while two light receiving elements are provided, other optical elements are commonly used for the lasers of the three wavelengths and therefore the number of main optical parts are small as compared with the prior art examples as shown in Table 1, and there are advantages in which miniaturization and reduced production cost are reaped

Although not illustrated, the optical recording and replaying device of the present invention includes at least the optical pickup head of the above described configurations (for example, first to third embodiments) and the medium holding mechanism for holding and rotating recording medium 2. This optical recording and replaying device is capable of realizing miniaturization and reduced production cost, and has compatibility with various types of optical discs and can perform optical recording and replay with high accuracy.

Although a certain preferred embodiment of the present invention has been shown and described in detail, it should be understood that various changes and modifications may be made without departing from the spirit or scope of the appended claims.

## Claims

1. An optical pickup head, comprising:
a semiconductor laser for irradiating an optical beam;
a light receiving element for converting an optical signal into an electrical signal; and
an object lens unit including a first object lens and a second object lens having a numerical aperture different from said first object lens, and capable of moving said first object lens and said second object lens in a tangential direction or in a radial direction of a disc-shaped recording medium so that said first object lens and said second object lens are selectively opposite to a positions to be irradiated with said optical beam of said recording medium.

2. The optical pickup head according to claim 1, further comprising:
a collimator lens positioned between said semiconductor laser and said object lens unit, and
a drive unit for moving said collimator lens in an optical axis direction.

3. The optical pickup head according to claim 1 or 2, further comprising one or a plurality of said semiconductor lasers for irradiating at least two types of optical beams, wherein
said first optical lens is an optical lens for HD-DVD (High Definition Digital Versatile Disc), and said second object lens is an object lens for Bluray Disc.

4. The optical pickup head according to any one of claims 1 to 3, wherein
said object lens unit includes a support member in which said first object lens and said second object lens are mounted side by side so that their optical axes are parallel to each other, and
said support member rotates in a plane intersecting said optical axes of said first object lens and said second object lens, thereby enabling said first object lens and said second object lens to be moved.

5. The optical pickup head according to any one of claims 1 to 3, wherein
said object lens unit includes the support member in which said first object lens and said second object lens are mounted side by side so that their optical axes are parallel to each other, and
said support member moves in parallel in a plane intersecting the optical axes of said first object lens and said second object lens, thereby enabling said first object lens and said second object lens to be moved.

6. An optical recording and replaying device, comprising the optical pickup head according to any one of claims 1 to 5 and a medium holding mechanism for holding and rotating said recording medium.
